# FASCICULE DE BREVET EUROPEEN

(11) **EP 1 743 463 B1**
(45) Date de publication et mention de la délivrance du brevet: **11.11.2009**
(21) Numéro de dépôt: 05732507.8
(22) Date de dépôt: 27.04.2005
(51) Int. Cl.: H04W 4/06

(54) **Transfert de contexte MBMS lors d'un changement de RNC**
MBMS Kontexttransfer in einem inter-RNC Handover
MBMS context transfer in a inter RNC handover

(30) Priorité: 07.05.2004 FR 0404978
(43) Date de publication de la demande: 17.01.2007
(73) Titulaire: Alcatel Lucent, 75008 Paris (FR)
(72) Inventeur: GODIN, Philippe, F-78220 Viroflay (FR); SEHEDIC, Yann, F-92170 Vanves (FR); LAUTIER, Laurence, F-78370 Plaisir (FR)
(74) Mandataire: Ameline, Jean-Paul B.C.
(86) Numéro de dépôt international: PCT/EP2005/004498
(87) Numéro de publication internationale: WO 2005/109780

(56) Documents cités:
- EP-A- 1 392 075
- 3GPP TECHNICAL SPECIFICATION GROUP SERVICES AND SYSTEM ASPECTS: "TS 23.246 V6.2.0: Multimedia Broadcast/Multicast Service (MBMS); Architectural and functional description" 3GPP TS 23.246 V6.2.0, XX, XX, mars 2004 (2004-03), pages 1-40, XP002302177

## Description

La présente invention concerne la mise en oeuvre de services de multidiffusion (autrement appelés "services multicast") dans un système de radiocommunication. Elle concerne plus particulièrement la continuité de tels services de multidiffusion au sein du système de radiocommunication.

Il est connu de mettre en oeuvre des services de multidiffusion dans un système de radiocommunication. On entend par services de multidiffusion des services destinés à un ensemble de terminaux disposant d'un abonnement correspondant. Parmi ces services, on peut citer par exemple la transmission de données relatives à un thème choisi (résultats sportifs, notifications d'événements d'actualité, informations boursières, etc.).

Si l'on se place par exemple dans le cadre d'un système de radiocommunication basé sur la technologie UMTS ("Universal Mobile Télécommunication System"), une fonctionnalité appelée MBMS ("Multimedia Broadcast/Multicast Service") a été prévue pour permettre la mise en oeuvre de tels services de multidiffusion à destination de terminaux radio UMTS. L'architecture de cette fonctionnalité MBMS est détaillée dans la spécification technique TS 23.246, "Technical Specification Group Services and System Aspects ; Multimédia Broadcast/Multicast Service (MBMS) ; Architecture and functional description (Release 6)", dont la dernière version publiée par le 3GPP ("3rd Generation Partnership Project") est la version 6.2.0 de mars 2004.

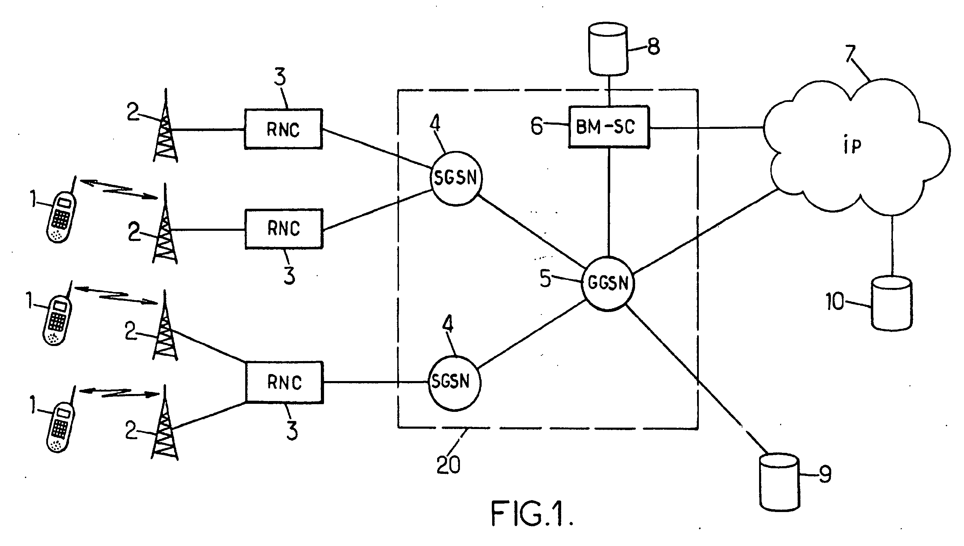

La figure 1 montre une architecture simplifiée d'un système de radiocommunication UMTS permettant la mise en oeuvre de services de multidiffusion selon la fonctionnalité MBMS.

Des terminaux radio mobiles 1, appelés UE ("User Equipment"), sont aptes à échanger des informations avec des contrôleurs de réseau radio 3, appelés RNC ("Radio Network Controller"), par l'intermédiaire de stations de base 2, encore appelées Nodes B selon le vocabulaire utilisé dans le système UMTS.

Par ailleurs, le système de radiocommunication représenté comprend un réseau coeur 20 composé notamment de commutateurs 4-5 interconnectés appelés SGSN ("Serving GPRS Support Nodes") dont certains au moins sont connectés à des RNC 3, et GGSN ("Gateway GPRS Support Node"). Le GGSN 5 est une passerelle permettant d'interfacer le système UMTS avec des réseaux externes, tel qu'un réseau 7 de données IP ("Internet Protocol").

Des serveurs 8-10 sont en outre agencés pour fournir des éléments de services à des UE 1 abonnés aux services correspondants par l'intermédiaire du système UMTS. Les services en question peuvent être de nature diverse. Ils sont adaptés pour être mis en oeuvre en multidiffusion.

A cet effet, le réseau coeur 20 comprend une unité spécifique appelée BM-SC 6 ("BroadcastlMulticast Service Center"), conformément à la fonctionnalité MBMS, qui assure la mise en oeuvre des services en diffusion (broadcast), ou en multidiffusion (multicast) comme cela sera plus particulièrement envisagé dans la suite de l'exposé. Dans l'exemple illustré sur la figure 1, le BM-SC 6 est connecté au GGSN 5.

Le BM-SC 6 peut ainsi mettre en oeuvre des services de multidiffusion à partir des éléments de services, par exemple des données thématiques, obtenus depuis les serveurs 8-10.

Pour pouvoir bénéficier d'un service de multidiffusion donné, un utilisateur disposant d'un UE 1 doit tout d'abord devenir abonné de ce service, c'est-à-dire qu'il doit souscrire à ce service auprès de l'opérateur du système de radiocommunication considéré.

Par la suite, l'abonné doit demander une activation du service en question de façon à être ajouté au groupe de multidiffusion constitué pour ce service. Cette procédure d'activation de service est décrite à la section 8.2 de la spécification technique TS 23.246 précitée. Elle consiste notamment, pour l'UE 1 considéré, à transmettre au BM-SC 6, par l'intermédiaire du RNC 3 dans la zone de couverture duquel il se trouve et de certains SGSN 4 et GGSN 5, un identifiant du service requis. Cet identifiant doit permettre l'identification du service de façon unique. Comme prévu dans la TS 23.246, il peut par exemple s'agir d'une association d'une adresse IP de multidiffusion ("IP multicast address"), correspondant par exemple à l'adresse IP du serveur apte à délivrer ce service, et d'un APN ("Access Point Name") c'est-à-dire d'un nom du point d'accès auquel le serveur correspondant est connecté. Du fait de l'information qu'il contient, cet identifiant a une longueur significative. Par exemple, lorsque l'identifiant est composé de l'association "IP multicast address + APN", il peut atteindre voire dépasser les 70 octets. Cet identifiant du service est nécessaire dans le SGSN afin de déterminer quel GGSN permet d'atteindre le BM-SC associé au service dont l'activation a été demandée par l'UE et permet de faire suivre l'activation du service jusqu'au BM-SC contrôlant l'accès de l'UE au service.

Il faut noter que le SGSN mémorise tous les services MBMS dont un UE qui lui est attaché a demandé l'activation et du RNC dans lequel se trouve un tel UE. Le GGSN mémorise tous les SGSNs dans lesquels est attaché au moins un UE ayant demandé l'activation d'un service MBMS. Le BM-SC mémorise tous les GGSNs ayant un SGSN au moins dans lequel est attaché au moins un UE ayant demandé l'activation d'un service MBMS. Cette mémorisation se fait lors de la procédure de « Registration » décrite à la section 8.4 de la spécification technique TS 23.246 précitée.

Par suite de la demande d'activation de service par l'UE 1, ce dernier reçoit en réponse un identifiant de service plus simple pour désigner le service requis. Cet identifiant est par exemple une identité de groupe temporaire appelée TMGI ("Temporary Mobile Group Identity") telle que spécifiée à la section 6.4 de la TS 23.246 précitée. Le TMGI a une longueur bien inférieure à l'identifiant unique de service mentionné plus haut.

Une fois que l'abonné considéré a demandé l'activation d'un service donné, il sera en mesure de recevoir des informations dans le cadre de ce service, une fois qu'une session relative à ce service aura démarré. La procédure de démarrage de session ("session start") est détaillée à la section 8.3 de la spécification technique TS 23.246 précitée.

Cette procédure, initiée par le BM-SC 6, permet l'activation des ressources du système de radiocommunication, nécessaires à la multidiffusion du service considéré. Le BM-SC envoie une indication du démarrage d'une session vers tous les GGSNs mémorisés précédemment. Le GGSN envoie l'indication vers tous les SGSNs mémorisés précédemment. Le SGSN envoie l'indication vers tous les RNCs sous lesquels sont attachés les UEs ayant demandé l'activation du service concerné par la session considérée. Par exemple, le RNC 3 dans la zone de couverture duquel se trouve l'UE 1 qui a une souscription audit service et qui a préalablement demandé l'activation de ce service par l'intermédiaire dudit RNC, est informé par le BM-SC 6, par l'intermédiaire du GGSN 5 et de certains SGSN 4 que le service va démarrer. Le RNC 3 notifie alors ce démarrage de session, par exemple par l'intermédiaire d'un message de paging sur la voie radio. Cette notification incorpore l'identifiant simplifié du service qui va démarrer, c'est-à-dire typiquement le TMGI correspondant à ce service, qu'il a obtenu préalablement du réseau coeur et plus particulièrement du BM-SC.

Sur réception de la notification, l'UE 1, qui dispose également du TMGI, prend acte du fait que le service correspondant à ce TMGI va démarrer. Il est alors en mesure de recevoir des informations dans le cadre du service mis en oeuvre. Il en est de même pour tous les UE ayant une souscription à ce service et ayant demandé l'activation de ce service, puisque tous ces UE font alors partie du même groupe de multidiffusion et connaissent donc le même TMGI.

Un problème se pose cependant lorsqu'un UE passe dans la zone de couverture d'un nouveau RNC, c'est-à-dire lorsque cet UE entre en liaison radio avec une station de base contrôlée par un nouveau RNC. Cela peut par exemple se produire suite à une mobilité entre une cellule couverte par une station de base contrôlée par un premier RNC et une cellule couverte par une station de base contrôlée par un second RNC.

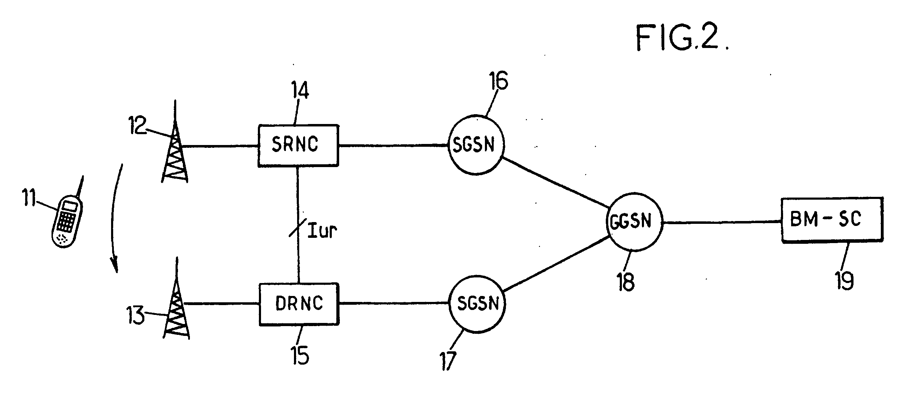

La figure 2 illustre ce cas de figure. On y voit un UE 11 qui avait initialement une liaison radio avec la station de base 12 sous le contrôle d'un contrôleur de réseau radio 14 dit de desserte, ou encore SRNC ("Serving RNC") et qui se déplace de façon à entrer en liaison radio avec la station de base 13 qui est reliée au contrôleur de réseau radio 15 dit relais, encore appelé DRNC ("Drift RNC"). L'interface entre SRNC et DRNC s'appelle l'lur. Elle est définie dans la spécification technique 3GPP TS 25.401, « UTRAN Overall Description », version 3.1.0 publiée en janvier 2000 par le 3GPP.

Lorsque l'UE 11 a effectué une demande d'activation d'un service donné alors qu'il était dans la zone de couverture du SRNC 14, cette demande a été relayée par le SRNC 14 au BM-SC 19 par l'intermédiaire du SGSN 16 et du GGSN 18. Par la suite, lorsqu'une session démarrera relativement à ce service, le SRNC 14 en sera informé par l'intermédiaire du SGSN 16. Toutefois, lorsque l'UE 11 s'est déplacé et est entré dans la zone de couverture du DRNC 15 après sa demande d'activation de service, le SRNC 14 ne sera plus en mesure de lui notifier le démarrage de la session.

En outre, la demande d'activation du service par l'UE 11 n'ayant pas transité par le DRNC 15 dans ce cas, le BM-SC 19 ne signalera pas forcément au DRNC 15 le démarrage d'une session pour le service requis par l'UE 11. En effet, le réseau coeur n'est en général pas conscient du passage d'un UE d'un SRNC à un DRNC.

Pour pallier ce problème, la procédure d'enregistrement ("MBMS registration procédures") prévue à la section 8.4 de la TS 23.246 précitée peut être utilisée. Selon cette procédure, le DRNC 15 indique au réseau coeur auquel il est connecté qu'il souhaite être informé du démarrage d'une session relative à un service donné. Une fois la procédure d'enregistrement achevée, le DRNC 15 est mémorisé dans la liste, gérée au niveau du réseau coeur, des RNC auxquels le démarrage d'une session relative audit service doit être signalée. Après indication du démarrage d'une telle session au DRNC 15, celui-ci est alors en mesure de notifier le démarrage à l'UE 11 par l'intermédiaire de la station de base 13.

Cependant, pour être capable d'effectuer un tel enregistrement, le DRNC 15 doit savoir pour quels services l'UE 11 a demandé une activation lorsqu'il était dans la zone de couverture du SRNC 14. En particulier, le DRNC 15 doit disposer d'un identifiant complet de chacun de ces services dont l'activation a préalablement été demandée par l'UE 11.

Or, la fonctionnalité MBMS telle qu'elle est spécifiée actuellement ne donne pas d'indication sur la façon dont un DRNC peut obtenir l'identité complète des services dont l'activation a préalablement été demandée par un UE qui est entré dans sa zone de couverture.

Un but de la présente invention est de pallier ce manque, c'est-à-dire de permettre à un DRNC d'avoir une connaissance des services dont l'activation a préalablement été demandée par un UE qui vient d'entrer dans sa zone de couverture.

Un autre but de l'invention est de permettre à un DRNC d'être informé par le réseau coeur du démarrage d'une session relative à un service dont l'activation a préalablement été demandée par un UE qui vient d'entrer dans sa zone de couverture.

Un autre but de l'invention est de permettre à un DRNC de notifier le démarrage d'une session relative à un service dont l'activation a préalablement été demandée par un UE qui vient d'entrer dans sa zone de couverture.

L'invention propose ainsi un procédé pour assurer une continuité de service de multidiffusion dans un système de radiocommunication selon la revendication 1.

La transmission du premier identifiant du service depuis le contrôleur de réseau radio de desserte vers le contrôleur de réseau radio relais permet à ce dernier de constater que le service dont l'activation a préalablement été demandée par ledit terminal radio fait partie des services ayant déjà fait l'objet d'une demande d'activation par d'autres terminaux par son intermédiaire. Ainsi, il est déjà prévu que ce contrôleur de réseau radio relais soit informé par le réseau coeur du démarrage d'une session relative audit service (il est SRNC pour d'autres UEs ayant demandé l'activation de ce même service et n'a donc pas besoin de s'enregistrer auprès de son SGSN pour être informé du démarrage du service). Lorsque ce contrôleur de réseau radio relais notifiera ce démarrage dans sa zone de couverture, le terminal entrant considéré pourra alors recevoir une telle notification, et pourra donc bénéficier du service dont il a demandé l'activation préalablement.

En revanche, lorsque aucun terminal radio n'a préalablement demandé l'activation dudit service par l'intermédiaire du contrôleur de réseau radio relais, on met avantageusement en oeuvre les étapes suivantes :
- requérir, depuis le contrôleur de réseau radio relais, la transmission par le contrôleur de réseau radio de desserte du second identifiant du service dont l'activation a préalablement été demandée par ledit terminal radio, la requête incorporant le premier identifiant dudit service ;
- transmettre en réponse au contrôleur de réseau radio relais, le second identifiant dudit service depuis le contrôleur de réseau radio de desserte ; et
- requérir, depuis le contrôleur de réseau radio relais, que le réseau coeur lui signale le démarrage d'une session relative audit service, la requête incorporant le second identifiant dudit service transmis au contrôleur de réseau radio relais.

En d'autres termes, on obtient au contrôleur de réseau radio relais, depuis le contrôleur de réseau radio de desserte, un second identifiant, plus long que le premier, du service requis par le terminal radio. Puis, sur la base de cet identifiant, on effectue une procédure d'enregistrement depuis le contrôleur de réseau radio relais. A l'issue de cette procédure, le contrôleur de réseau radio relais fait alors partie des contrôleurs de réseau radio qui vont être informés du démarrage d'une session relative audit service. Il sera ensuite en mesure de notifier ce démarrage dans sa zone de couverture, si bien que le terminal radio considéré sera informé du démarrage du service.

De façon avantageuse, les services de multidiffusion sont mis en oeuvre dans le système de radiocommunication selon la fonctionnalité MBMS.

Par ailleurs, le second identifiant de service peut être un identifiant unique de service tel que présenté en introduction, par exemple une association "IP multicast address + APN". Le premier identifiant de service plus court, quant à lui, peut être par exemple le TMGI mentionné plus haut.

L'invention propose en outre un contrôleur de réseau radio dans un système de radiocommunication selon la revendication 6.

Ce contrôleur de réseau radio est un contrôleur de réseau radio de desserte vis-à-vis dudit terminal radio.

De façon avantageuse, il comprend en outre des moyens pour obtenir un second identifiant de chaque service de multidiffusion dont l'activation a préalablement été demandée par au moins un terminal radio par l'intermédiaire dudit contrôleur de réseau radio, le second identifiant de chaque service ayant une longueur supérieure au premier identifiant du même service. Il comprend en outre, lorsque aucun terminal radio n'a préalablement demandé l'activation dudit service par l'intermédiaire du second contrôleur de réseau radio :
- des moyens pour recevoir, depuis le second contrôleur de réseau radio, une requête de transmission du second identifiant du service dont l'activation a préalablement été demandée par ledit terminal radio, la requête incorporant le premier identifiant dudit service ; et
- des moyens pour transmettre en réponse au second contrôleur de réseau radio le second identifiant dudit service.

L'invention propose en outre un contrôleur de réseau radio dans un système de radiocommunication selon la revendication 8.

Ce contrôleur de réseau radio est un contrôleur de réseau radio relais vis-à-vis dudit terminal radio.

De façon avantageuse, il comprend en outre des moyens pour requérir que le réseau coeur lui signale le démarrage d'une session relative à un service de multidiffusion, la requête incorporant un second identifiant dudit service préalablement obtenu par ledit contrôleur de réseau radio, le second identifiant de chaque service ayant une longueur supérieure au premier identifiant du même service. Le contrôleur de réseau radio comprend en outre, lorsque aucun terminal radio n'a préalablement demandé l'activation dudit service par l'intermédiaire dudit contrôleur de réseau radio :
- des moyens pour requérir la transmission par le second contrôleur de réseau radio du second identifiant du service dont l'activation a préalablement été demandée par ledit terminal radio, la requête incorporant le premier identifiant dudit service ;
- des moyens pour recevoir en réponse le second identifiant dudit service depuis le second contrôleur de réseau radio ; et
- des moyens pour requérir que le réseau coeur lui signale le démarrage d'une session relative audit service, la requête incorporant le second identifiant dudit service reçu par les moyens pour recevoir le second identifiant dudit service depuis le second contrôleur de réseau radio.

D'autres particularités et avantages de la présente invention apparaîtront dans la description ci-après d'exemples de réalisation non limitatifs, en référence aux dessins annexés, dans lesquels :
- la figure 1, déjà commentée, est un schéma représentant une architecture simplifiée d'un système de radiocommunication utilisant la fonctionnalité MBMS ;
- la figure 2, déjà commentée, est un schéma représentant une architecture simplifiée d'un système de radiocommunication dans lequel l'invention peut être mise en oeuvre ;
- la figure 3 est un schéma représentant un échange de signalisation entre des contrôleurs de réseau radio, apte à surmonter les manques de l'état de la technique évoqués plus haut ; et
- la figure 4 est un schéma représentant un échange de signalisation entre des contrôleurs de réseau radio selon l'invention.

On expose ci-après, en référence à la figure 2, un premier moyen de surmonter les manques de l'état de la technique évoqués en introduction. Ainsi, un identifiant unique de chaque service dont l'activation a préalablement été demandée par l'UE 11 par l'intermédiaire du SRNC 14, c'est-à-dire lorsqu'il était sous la couverture du SRNC 14, est transmis au DRNC 15 par le SRNC 14.

Comme mentionné en introduction, en effet, le SRNC 14 dispose d'un identifiant unique, tel qu'une association "IP multicast address + APN", pour chaque service pour lequel l'UE 11 a demandé une activation. Cet identifiant lui est rendu disponible par exemple à la suite d'une procédure dite "MBMS UE linking" décrite à la section 8.15 de la TS 23.246 précitée.

Lorsque l'UE 11 passe dans la zone de couverture du DRNC 15, le SRNC 14 communique alors ces identifiants uniques de services au DRNC 15. Cette transmission est effectuée par un échange de signalisation sur l'interface lur entre le SRNC 14 et le DRNC 15. Elle peut avantageusement utiliser des messages de signalisation existants sur cette interface.

Par exemple, la procédure d'échange d'informations "Radio Link Setup" peut être utilisée comme support d'une telle transmission. Elle est décrite notamment dans la spécification technique TS 25.423, version 5.9.0, Release 5, "UTRAN lur interface Radio Network Subsystem ; Application Part (RNSAP) signalling", publiée en mars 2004 par le 3GPP. Selon cette procédure. Le SRNC 14 constate que l'UE 11 a quitté sa zone de couverture pour celle du DRNC 15 et transmet alors les identifiants des services requis par l'UE 11 au DRNC 15.

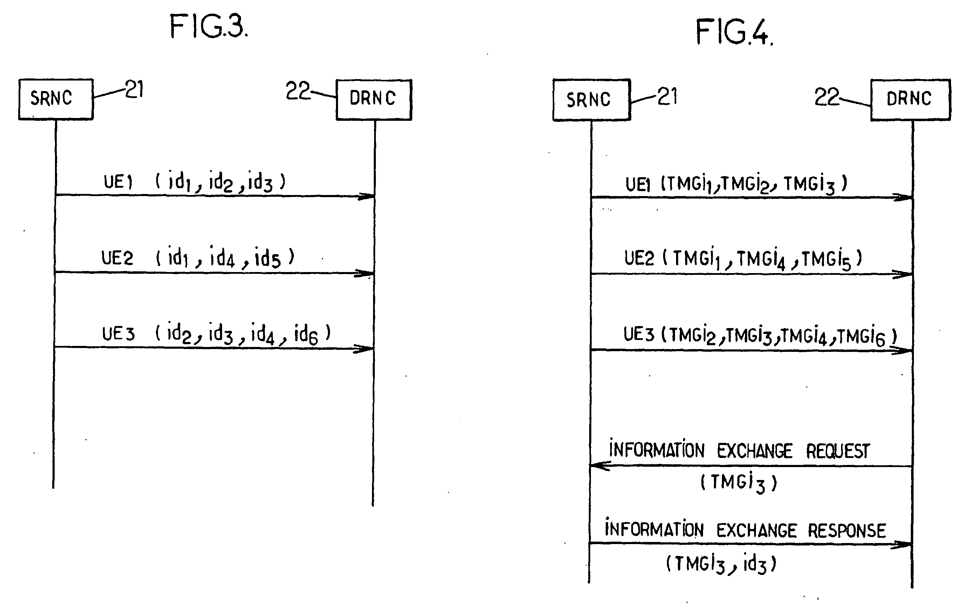

La figure 3 illustre une transmission selon ce mode de fonctionnement. L'exemple illustré sur cette figure prend comme hypothèses que trois terminaux UE1, UE2 et UE3 sont initialement dans la zone de couverture d'un SRNC 21, c'est-à-dire qu'ils ont une liaison radio avec une station de base contrôlée par le SRNC 21. Chacun de ces terminaux possède un abonnement pour différents services et a demandé une activation de ces services par l'intermédiaire du SRNC 21, c'est-à-dire lorsqu'il se trouvait dans la zone de couverture de ce SRNC 21. Par suite d'une mobilité par exemple, ces terminaux entrent ensuite dans la zone de couverture d'un nouveau RNC 22, qui est un DRNC vis-à-vis de ces terminaux.

Le SRNC 21 transmet pour chacun des trois terminaux impliqués, les identifiants uniques complets des services pour lesquels les terminaux correspondants ont demandé une activation alors qu'ils se trouvaient dans la zone de couverture du SRNC 21.

Ainsi, dans l'exemple illustré, le SRNC 21 transmet au DRNC 22 les identifiants complets id₁, id₂ et id₃ des trois services dont l'UE1 a demandé l'activation par l'intermédiaire du SRNC 21. De même, les trois identifiants id₁, id₄ et id₅ des services dont l'UE2 a demandé l'activation par l'intermédiaire du SRNC 21, ainsi que les quatre identifiants id₂, id₃, id₄ et id₆ des services dont l'UE3 a demandé l'activation par l'intermédiaire du SRNC 21 sont transmis au DRNC 22 par le SRNC 21.

On notera que certains des services requis sont communs entre certains des terminaux (par exemple le service d'identifiant id₁ pour UE1 et UE2, le service d'identifiant id₂ pour UE1 et UE3, ou encore le service d'identifiant id₄ pour UE2 et UE3). En revanche, d'autres services n'ont fait l'objet d'une demande d'activation par l'intermédiaire du SRNC 21 que par un des trois terminaux (par exemple le service d'identifiant id₅ pour UE2 et le service d'identifiant id₆ pour UE3).

On constate ainsi qu'à l'issue de cette procédure sur l'interface lur entre le SRNC 21 et le DRNC 22, le DRNC 22 connaît l'ensemble des services dont l'activation a été préalablement demandée par chaque UE par l'intermédiaire du SRNC 21, c'est-à-dire lorsqu'il se trouvait sous la couverture du SRNC 21, chaque service étant identifié de façon unique par son identifiant complet ("IP multicast address + APN" par exemple). Le DRNC 22 est alors en mesure d'initier une procédure d'enregistrement auprès du BM-SC du réseau coeur auquel il est connecté, de façon à ce que le démarrage d'une session pour l'un des services d'identifiant id₁ à id₆ lui soit signalé par le réseau coeur. Par suite, le DRNC 22 pourra notifier ce démarrage, si bien que l'UE concerné pourra en être informé.

On notera cependant que la procédure décrite ci-dessus est lourde et non optimale. En effet, l'exemple illustré sur la figure 3 montre que les identifiants de services dont l'activation a été demandée par plusieurs UEs sont transmis de multiples fois du SRNC 21 au DRNC 22. Si chaque identifiant unique de service possède environ 70 octets, la redondance de transfert est coûteuse en ressources.

Le message transmis sur l'interface lur relativement à l'UE1 ou l'UE2, qui ont requis trois services chacun, est d'au moins 210 octets (=3x70), tandis que le message transmis sur l'interface lur relativement à l'UE3, qui a demandé l'activation d'autres services, est d'au moins 280 octets (=4x70). Ceci est d'autant plus pénalisant que certains des services demandés sont communs entre des terminaux comme souligné ci-dessus.

En outre, on notera que la procédure de signalisation sur l'interface lur peut s'appuyer sur des messages existants qui peuvent porter des informations supplémentaires par rapport aux identifiants de services MBMS. Par exemple, ces messages peuvent aussi inclure des informations utilisées dans le cadre de l'établissement de ressources sur le DRNC. Une augmentation substantielle de la longueur de ces messages peut alors en outre pénaliser d'autres mécanismes liés à la transmission de ces messages, comme l'allocation de ressources sur le DRNC.

L'invention prévoit donc un autre mécanisme permettant de surmonter les manques de l'état de la technique présenté en introduction, tout en évitant les inconvénients de la solution décrite ci-dessus.

Ce mécanisme est décrit en référence à un exemple illustré sur la figure 4 et reprenant les mêmes hypothèses que dans l'exemple précédent décrit en référence à la figure 3. Ainsi, le SRNC 21 transmet au DRNC 22, par l'intermédiaire de l'interface lur, la liste des TMGI correspondants aux services pour lesquels chaque UE a préalablement demandé une activation par l'intermédiaire du SRNC 21 (c'est-à-dire lorsqu'il se trouvait dans la zone de couverture du SRNC 21). Cette transmission est par exemple effectuée lorsqu'on a constaté qu'un terminal donné est passé de la zone de couverture du SRNC 21 à celle du DRNC 22, par exemple à la suite d'un déplacement de ce terminal.

Selon l'exemple illustré, le SRNC 21 indique donc au DRNC 22, les identifiants TMGI₁, TMGI₂ et TMGI₃ des services dont l'activation a préalablement été demandée par l'UE1, les identifiants TMGI₁, TMGI₄ et TMGI₅ des services dont l'activation a préalablement été demandée par l'UE2 et les identifiants TMGI₂, TMGI₃, TMGI₄ et TMGI₆ des services dont l'activation a préalablement été demandée par l'UE3.

On rappelle que les identifiants TMGI₁ à TMGI₆ sont disponibles au niveau du SRNC 21. En effet, ces identifiants sont fournis au SRNC 21, en même temps que les identifiants complets, par exemple lors de la procédure dite "MBMS UE linking" décrite à la section 8.15 de la TS 23.246 précitée.

De plus, dans une large majorité des cas, le DRNC 22 qui est effectivement un RNC relais vis-à-vis de UE1, UE2 et UE3, est par ailleurs un RNC de desserte, c'est-à-dire un SRNC pour d'autres UE, les UE étant généralement répartis de façon aléatoire dans la zone couverte par le système de radiocommunication. Qui plus est, il est fortement probable que certains des services dont une activation a été demandée par l'intermédiaire du DRNC 22 en tant que SRNC par certains de ces UE soient communs avec certains services requis par UE1, UE2 ou UE3. De ce fait, le DRNC 22 a déjà relayé une demande d'activation de ces services vers le BM-SC et il sera donc informé du démarrage d'une session relative à l'un de ces services par le BM-SC, comme expliqué plus haut.

On considère ci-après que les services d'identifiants respectifs TMGI₁, TMGI₂ et TMGI₄ à TMGI₆ (ou id₁, id₂ et id₄ à id₆ en ce qui concerne les identifiants complets) ont déjà été fait l'objet d'une demande d'activation par l'intermédiaire du DRNC 22, en tant que SRNC vis-à-vis de certains UE. En revanche, le service d'identifiant TMGI₃ (ou id₃) n'a encore jamais fait l'objet d'une demande d'activation par un UE par l'intermédiaire du DRNC 22.

Pour les services d'identifiants respectifs TMGI₁, TMGI₂ et TMGI₄ à TMGI₆, il découle de ce qui précède que le DRNC 22 sera informé par le réseau coeur du démarrage d'une session relative à l'un de ces services. Ainsi, lorsque le DRNC 22 reçoit une indication selon laquelle une session démarre relativement au service associé au TMGI₁ ou au TMGI₂, il notifie ce démarrage dans sa zone de couverture. La notification est alors reçue par UE1, en plus des autres UE qui ont préalablement demandé l'activation du service par l'intermédiaire du DRNC 22, en tant que SRNC.

On comprend ainsi que, dans une large majorité des cas, la simple transmission des identifiants TMGI au DRNC 22, suffit à ce dernier pour permettre de notifier le démarrage de services de multidiffusion aux UE1, UE2 et UE3. Or, comme il a été indiqué plus haut, un TMGI a une longueur bien inférieure à un identifiant complet de service du type "IP multicast address + APN", si bien que les messages transmis sur l'interface lur sont de taille restreinte, ce qui limite les inconvénients de la solution mentionnée ci-dessus. En outre, on évite des procédures d'enregistrement inutiles depuis le DRNC 22.

Pour ce qui est du service identifié par TMGI₃ ou id₃, dont l'activation a été demandée par UE1 et UE3 par l'intermédiaire du SRNC 21, on considère qu'il n'a fait l'objet d'aucune demande d'activation par l'intermédiaire du DRNC 22, en tant que SRNC, par un UE se trouvant dans la zone de couverture du DRNC 22, c'est-à-dire en liaison radio avec une station de base contrôlée par ce DRNC 22. Dans ce cas, qui est en pratique très minoritaire, le DRNC,22 ne dispose pas de l'identifiant complet correspondant id₃. De plus, l'identifiant court TMGI₃ correspondant, reçu du SRNC 21, ne suffit pas au DRNC 22 pour effectuer une procédure d'enregistrement telle que décrite plus haut, puisque celle-ci utilise uniquement les identifiants complets id.

Dans ce cas particulier, le DRNC 22 demande alors avantageusement au SRNC 21 de lui fournir l'identifiant unique du service correspondant. Cela est illustré au bas du diagramme de la figure 4, le DRNC 22 transmet une requête ("Information exchange request") au SRNC 21 sur l'interface lur. Il inclut dans cette requête l'identifiant TMGI₃ du service dont il souhaite recevoir l'identifiant complet. Le SRNC 21 répond alors par un message ("Information exchange response") contenant, éventuellement outre l'identifiant TMGI₃ reçu, l'identifiant unique du service correspondant, à savoir id₃. Ainsi, l'identifiant id₃ est transmis une seule fois sur l'interface lur quel que soit le nombre d'UE ayant requis le service correspondant, ce qui évite de surcharger inutilement l'interface lur.

Sur réception de ce message de réponse, le DRNC 22 est alors en mesure d'effectuer une procédure d'enregistrement telle que décrite plus haut, de manière à indiquer au réseau coeur auquel il est connecté qu'il souhaite être informé du démarrage d'une session relative au service d'identifiant id₃. Par la suite, lorsqu'une telle session démarre, le DRNC 22 en est alors informé et il peut notifier ce démarrage, de façon à ce que UE1 et UE3, qui ont préalablement demandé l'activation de ce service par l'intermédiaire du SRNC 21, en soit eux-mêmes informés.

Grâce au mécanisme décrit ci-dessus, on permet ainsi à un DRNC d'être informé et donc de pouvoir notifier le démarrage de sessions relatives à des services de multidiffusion dont l'activation a préalablement été demandée par des UE par l'intermédiaire d'un SRNC. En outre, ce mécanisme limite la quantité d'information échangée sur chaque interface lur entre le DRNC considéré et tout SRNC. Il évite en outre une multitude de procédures d'enregistrement à partir du DRNC en tirant profit d'informations déjà obtenues relativement à des UE desservis par ce DRNC en tant que SRNC.

## Revendications

1. Procédé pour assurer une continuité de service de multidiflusion dans un système de radiocommunication comprenant un réseau coeur (20) et au moins deux contrôleurs de réseau radio (3, 14, 15, 21, 22) connectés au réseau coeur,
dans lequel chaque contrôleur de réseau radio dispose d'un premier identifiant de chacun des services de multidiffusion dont l'activation a préalablement été demandée par au moins un terminal radio (1, 11) par l'intermédiaire dudit contrôleur de réseau radio, et est apte à notifier à des terminaux radio situés dans une zone de couverture dudit contrôleur de réseau radio le démarrage d'au moins une session relative à l'un desdits services de multidiffusion, signalé par le réseau coeur, la notification incorporant le premier identifiant dudit service,
dans lequel chaque contrôleur de réseau radio dispose en outre d'un second identifiant de chacun des services de multidiffusion dont l'activation a préalablement été demandée par au moins un terminal radio par l'intermédiaire dudit contrôleur de réseau radio, le second identifiant de chaque service ayant une longueur supérieure au premier identifiant du même service,
le procédé comprenant, relativement à un terminal radio (11) entrant dans la zone de couverture d'un contrôleur de réseau radio relais (15) après avoir été dans la zone de couverture d'un contrôleur de réseau radio de desserte (14) parmi lesdits contrôleurs de réseau radio, ledit terminal radio ayant préalablement demandé l'activation d'un service de multidiffusion par l'intermédiaire du contrôleur de réseau radio de desserte, une étape de transmission du premier identifiant dudit service depuis le contrôleur de réseau radio de desserte vers le contrôleur de réseau radio relais.

2. Procédé selon la revendication 1, dans lequel chaque contrôleur de réseau radio est en outre apte à requérir que le réseau coeur lui signale le démarrage d'une session relative à un service de multidiffusion, la requête incorporant le second identifiant dudit service préalablement obtenu par ledit contrôleur de réseau radio,
le procédé comprenant en outre les étapes suivantes, lorsque aucun terminal radio n'a préalablement demandé l'activation dudit service par l'intermédiaire du contrôleur de réseau radio relais (15) :
- requérir, depuis le contrôleur de réseau radio relais, la transmission par le contrôleur de réseau radio de desserte (14) du second identifiant du service dont l'activation a préalablement été demandée par ledit terminal radio (11), la requête incorporant le premier identifiant dudit service;
- transmettre en réponse au contrôleur de réseau radio relais, le second identifiant dudit service depuis le contrôleur de réseau radio de desserte; et
- requérir, depuis le contrôleur de réseau radio relais, que le réseau coeur lui signale le démarrage d'une session relative audit service, la requête incorporant le second identifiant dudit service transmis au contrôleur de réseau radio relais.

3. Procédé selon la revendication 1 ou 2, dans lequel ledit terminal radio (11) entre dans la zone de couverture du contrôleur de réseau radio relais (15) après avoir été dans la zone de couverture du contrôleur de réseau radio de desserte (14) en conséquence d'un déplacement dudit terminal radio.

4. Procédé selon l'une quelconque des revendications précédentes, dans lequel les services de multidiffusion sont mis en oeuvre dans le système de radiocommunication selon la fonctionnalité MBMS ("Multimedia Broadcast/Multicast Service").

5. Procédé selon l'une quelconque des revendications précédentes, dans lequel le second identifiant d'un service comprend une association entre une adresse relative à un serveur (8, 9, 10) apte à délivrer des informations relative audit service et un point d'accès dans le réseau coeur auquel ledit serveur est connecté.

6. Contrôleur de réseau radio (14, 21) dans un système de radiocommunication comprenant en outre au moins un second contrôleur de réseau radio (15, 22) et un réseau coeur (20) auquel ledit contrôleur de réseau radio est connecté,
le contrôleur de réseau radio comprenant des moyens pour obtenir un premier identifiant de chaque service de multidiffusion dont l'activation a préalablement été demandée par au moins un terminal radio (1, 11) par l'intermédiaire dudit contrôleur de réseau radio,
le contrôleur radio comprenant en outre des moyens pour obtenir un second identifiant dé chaque service de multidiffusion dont l'activation a préalablement été demandée par au moins un terminal radio par l'intermédiaire dudit contrôleur de réseau radio, le second identifiant de chaque service ayant une longueur supérieure au premier identifiant du même service,
le contrôleur de réseau radio comprenant en outre des moyens pour, relativement à un terminal radio (11) entrant dans la zone de couverture du second contrôleur de réseau radio (15) après avoir été dans la zone de couverture dudit contrôleur de réseau radio (14), ledit terminal radio ayant préalablement demandé l'activation d'un service de multidiffusion par l'intermédiaire dudit contrôleur de réseau radio, transmettre le premier identifiant dudit service au second contrôleur de réseau radio.

7. Contrôleur de réseau radio selon la revendication 6, comprenant en outre, lorsque aucun terminal radio n'a préalablement demandé l'activation dudit service par l'intermédiaire du second contrôleur de réseau radio (15) :
- des moyens pour recevoir, depuis le second contrôleur de réseau radio, une requête de transmission du second identifiant du service dont l'activation a préalablement été demandée par ledit terminal radio (11), la requête incorporant le premier identifiant dudit service ; et
- des moyens pour transmettre en réponse au second contrôleur de réseau radio le second identifiant dudit service.

8. Contrôleur de réseau radio (15, 22) dans un système de radiocommunication comprenant en outre au moins un second contrôleur de réseau radio (14, 21) et un réseau coeur (20) auquel le contrôleur de réseau radio est connecté,
le contrôleur de réseau radio comprenant des moyens pour obtenir un premier identifiant de chacun des services de multidiffusion dont l'activation a préalablement été demandée par au moins un terminal radio (1,11) par l'intermédiaire dudit contrôleur de réseau radio, et des moyens pour notifier à des terminaux radio situés dans une zone de couverture dudit contrôleur de réseau radio le démarrage d'au moins une session relative à un desdits services de multidiffusion, signalé par le réseau coeur, la notification incorporant le premier identifiant dudit service,
le contrôleur de réseau radio comprenant en outre des moyens pour; relativement à un terminal radio (11) entrant dans sa zone de couverture après avoir été dans la zone de couverture du second contrôleur de réseau radio, ledit terminal radio ayant préalablement demandé l'activation d'un service de multidiffusion par l'intermédiaire du second contrôleur de réseau radio, recevoir le premier identifiant dudit service depuis ledit second contrôleur de réseau radio,
le contrôleur de réseau radio comprenant én outre des moyens pour requérir que Le réseau coeur lui signale le démarrage d'une session relative à un service de multidiffusion, la requête incorporant un second identifiant dudit service préalablement obtenu par ledit contrôleur de réseau radio, le second identifiant de chaque service ayant une longueur supérieure au premier identifiant du même service,
le contrôleur de réseau radio comprenant en outre, lorsque aucun terminal radio n'a préalablement demandé l'activation dudit service par l'intermédiaire dudit contrôleur de réseau radio:
- des moyens pour requérir la transmission par le second contrôleur de réseau radio du second identifiant du service dont l'activation a préalablement été demandée par ledit terminal radio (11), la requête
- des moyens pour recevoir en réponse le second identifiant dudit service depuis le second contrôleur de réseau radio ; et
- des moyens pour requérir que le réseau coeur lui signale le démarrage d'une session relative audit service, la requête incorporant le second identifiant dudit service reçu par les moyens pour recevoir le second identifiant dudit service depuis le second contrôleur de réseau radio.

## Claims

1. Method to ensure multicasting service continuity in a radio communications system comprising a core network (20) and at least two radio network controllers (3, 14, 15, 21, 22) connected to the core network,
wherein each radio network controller has a first identifier of each of the multicast services for which activation was previously requested by at least one radio terminal (1, 11) via said radio network controller, and which is capable of notifying radio terminals located in a coverage area of said radio network controller of the start of at least one session relating to one of said multicast services, reported by the core network, the notification incorporating the first identifier of said service,
wherein each radio network controller further has a second identifier of each of the multicast services for which activation was previously requested by at least one radio terminal via said radio network controller, the second identifier of each service being of a length greater than that of the first identifier of the same service,
the method comprising, with respect to a radio terminal (11) entering the coverage area of a drift radio network controller (15) after having been in the coverage area of a serving radio network controller (14) among said radio network controllers, said radio terminal having previously requested the activation of a multicast service via the serving radio network controller, a step of sending the first identifier of said service from the serving radio network controller towards the drift radio network controller.

2. Method according to Claim 1, wherein each radio network controller is furthermore capable of requesting from the core network to report to it the start of a session relating to a multicast service, the request incorporating the second identifier of said service previously obtained by said radio network controller,
the method further comprising the following steps, whenever no radio terminal has previously requested the activation of said service via the drift radio network controller (15):
- requesting, from the drift radio network controller, the sending, by the serving radio network controller (14), of the second identifier of the service for which activation was previously requested by said radio terminal (11), the request incorporating the first identifier of said service;
- sending, in response, from the serving radio network controller, the second identifier of said service to the drift radio network controller ; and
- requesting, from the drift radio network controller, that the core network reports to it the start of a session relating to said service, the request incorporating the second identifier of said service sent to the drift radio network controller.

3. Method according to claims 1 or 2, wherein said radio terminal (11) enters the coverage area of a drift radio network controller (15) after having been in the coverage area of a serving radio network controller (14) as a consequence of said radio terminal having moved.

4. Method according to any of the preceding claims, wherein the multicast services are implemented in the radio communications system according to the MBMS (Multimedia Broadcast/Multicast Service) function.

5. Method according to any one of the preceding claims, wherein the second identifier of a service comprises an association between an address relating to a server (8, 9,10) capable of delivering information relating to said service and an access point in the core network to which said server is connected.

6. Radio network controller (14, 21) in a radio communications system further comprising at least a second radio network controller (15, 22) and a core network (20) to which said radio network controller is connected,
the radio network controller comprising means for obtaining a first identifier of each multicast service for which activation was previously requested by at least one radio terminal (1, 11) via said radio network controller,
the radio controller further comprising means for obtaining a second identifier of each multicast service for which activation was previously requested by at least one radio terminal via said radio network controller, the second identifier of each service being of a length greater than that of the first identifier of the same service,
the radio network controller further comprising means for, with respect to a radio terminal (11) entering the coverage area of the second radio network controller (15) after having been in the coverage area of said radio network controller (14), said radio terminal having previously requested activation of a multicast service via said radio network controller, sending the first identifier of said service to the second radio network controller.

7. Radio network controller according to claim 6, comprising, further comprising, whenever no radio terminal has previously requested activation of said service via the second radio network controller (15):
- means for receiving, from the second radio network controller, a request to send the second identifier of the service for which activation was previously requested by said radio terminal (11), such request incorporating the first identifier of said service; and
- means for sending in response the second radio network controller, the second identifier of said service.

8. Radio network controller (15,22) in a radio communications system further comprising at least a second radio network controller (14, 21) and a core network (20) to which the radio network controller is connected,
the radio network controller comprising means for obtaining a first identifier of each of the multicast services for which activation was previously requested by at least one radio terminal (1, 11) via said radio network controller, and means for notifying radio terminals located in a coverage area of said radio network controller of the start of at least one session relating to one of said multicast services, reported by the core network, the notification incorporating the first identifier of said service,
the radio network controller further comprising means for, with respect to a radio terminal (11) entering its coverage area after having been in the coverage area of the second radio network controller, said radio terminal having previously requested activation of a multicast service via the second radio network controller, receiving the first identifier of said service from said second radio network controller,
the radio network controller further comprising means for requesting that the core network reports to it the start of a session relating to a multicast service, the request incorporating a second identifier of said service previously obtained by said radio network controller, the second identifier of each service being of a length greater than that of the first identifier of the same service,
the radio network controller further comprising, whenever no radio terminal has previously requested activation of said service via said radio network controller:
- means for requesting the sending by the second radio network controller of the second identifier of the service for which activation was previously requested by said radio terminal (11), the request incorporating the first identifier of said service;
- means for receiving, in response, the second identifier of said service from the second radio network controller; and
- means for requesting that the core network reports to it the start of a session relating to said service, the request incorporating the second identifier of said service received by the means for receiving the second identifier of said service from the second radio network controller.

## Patentansprüche

1. Verfahren zur Gewährleistung der Kontinuität von Multicast-Diensten in einem Funkkommunikationssystem mit einem Kernnetz (20) und mindestens zwei Funknetz-Controllern (3,14,15,21,22), welche an das Kernnetz angeschlossen sind,
wobei jeder Funknetz-Controller über eine erste Kennung eines jeden der Multicast-Dienste, dessen Aktivierung zuvor von mindestens einem Funkendgerät (1, 11) über den besagten Funknetz-Controller angefordert wurde, verfügt und fähig ist, Funkendgeräte, welche sich in einem Abdeckungsgebiet des besagten Funknetz-Controllers befinden, über den von dem Kernnetz signalisierten Beginn mindestens einer einem der besagten Multicast-Dienste entsprechenden Sitzung zu benachrichtigen, wobei die Benachrichtigung die erste Kennung des besagten Dienstes enthält,
wobei jeder Funknetz-Controller weiterhin über eine zweite Kennung eines jeden der Multicast-Dienste verfügt, dessen Aktivierung zuvor von mindestens einem Funkendgerät über den besagten Funknetz-Controller angefordert wurde, wobei die zweite Kennung eines jeden Dienstes eine größere Länge als die erste Kennung desselben Dienstes aufweist,
wobei das Verfahren relativ zu einem Funkendgerät (11), welches das Abdeckungsgebiet eines Relais-Funknetz-Controller (15) betritt, nachdem es sich im Abdeckungsgebiet eines Versorgungs-Funknetz-Controllers (14) unter den besagten Funknetz-Controllern aufgehalten hat, wobei das besagte Funkendgerät zuvor die Aktivierung eines Multicast-Dienstes über den Versorgungs-Funknetz-Controller angefordert hat, einen Schritt des Übertragens der ersten Kennung des besagten Dienstes von dem Versorgungs-Funknetz-Controller an den Relais-Funknetz-Controller umfasst.

2. Verfahren nach Anspruch 1, wobei jeder Funknetz-Controller weiterhin dafür ausgestaltet ist, um anzufordern, dass das Kernnetz ihm den Beginn einer einem Multicast-Dienst entsprechenden Sitzung signalisiert, wobei die Anforderung die zuvor von dem besagten Funknetz-Controller erhaltene zweite Kennung des besagten Dienstes enthält,
wobei das Verfahren weiterhin die folgenden Schritte umfasst, wenn kein Funkendgerät zuvor die Aktivierung des besagten Dienstes über den Relais-Funknetz-Controller (15) angefordert hat:
- Anfordern, ab dem Relais-Funknetz-Controller, der Übertragung, durch den Versorgungs-Funknetz-Controller (14), der zweiten Kennung des Dienstes, dessen Aktivierung zuvor von dem besagten Funkendgerät (11) angefordert wurde, wobei die Anforderung die erste Kennung des besagten Dienstes enthält;
- Übertragen, in Antwort an den Relais-Funknetz-Controller, der zweiten Kennung des besagten Dienstes ab dem Versorgungs-Funknetz-Controller; und
- Anfordern, ab dem Relais-Funknetz-Controller, dass das Kernnetz ihm den Beginn einer dem besagten Dienst entsprechenden Sitzung signalisiert, wobei die Anforderung die an den Relais-Funknetz-Controller übertragene zweite Kennung des besagten Dienstes enthält.

3. Verfahren nach Anspruch 1 oder 2, wobei das besagte Funkendgerät (11) im Anschluss an eine Ortsveränderung des besagten Funkendgeräts das Abdeckungsgebiet des Relais-Funknetz-Controllers (15) betritt, nachdem es sich im Abdeckungsgebiet des Versorgungs-Funknetz-Controllers (14) aufgehalten hat.

4. Verfahren nach einem beliebigen der vorstehenden Ansprüche, wobei die Multicast-Dienste im Funkkommunikationssystem gemäß der MBMS-Funktionalität ("Multimedia Broadcast/Multicast Service") ausgeführt werden.

5. Verfahren nach einem beliebigen der vorstehenden Ansprüche, wobei die zweite Kennung eines Dienstes eine Verbindung zwischen einer einen Server (8, 9, 10) betreffenden Adresse, welche geeignet ist, um die den besagten Dienst betreffenden Informationen zu liefern, und einem Zugangspunkt im Kernnetz, an welchen der besagte Server angeschlossen ist, umfasst.

6. Funknetz-Controller (14, 21) in einem Funkkommunikationssystem, welches weiterhin mindestens einen zweiten Funknetz-Controller (15, 22) und ein Kernnetz (20), an welches der besagte Funknetz-Controller angeschlossen ist, umfasst,
wobei der Funknetz-Controller Mittel zum Erhalten einer ersten Kennung eines jeden Multicast-Dienstes, dessen Aktivierung zuvor von mindestens einem Funkendgerät (1, 11) über den besagten Funknetz-Controller angefordert wurde, umfasst,
wobei der Funknetz-Controller weiterhin Mittel zum Erhalten einer zweiten Kennung eines jeden Multicast-Dienstes, dessen Aktivierung zuvor von mindestens einem Funkendgerät über den besagten Funknetz-Controller angefordert wurde, umfasst, wobei die zweite Kennung eines jeden Dienstes eine größere Länge als die erste Kennung desselben Dienstes aufweist,
wobei der Funknetz-Controller relativ zu einem Funkendgerät (11), welches das Abdeckungsgebiet des zweiten Funknetz-Controllers (15) betritt, nachdem es sich im Abdeckungsgebiet des besagten Funknetz-Controllers (14) aufgehalten hat, wobei das besagte Funkendgerät zuvor die Aktivierung eines Multicast-Dienstes über den besagten Funknetz-Controller angefordert hat, weiterhin Mittel zum Übertragen der ersten Kennung des besagten Dienstes an den zweiten Funknetz-Controller umfasst.

7. Funknetz-Controller nach Anspruch 6, weiterhin umfassend, wenn kein Funkendgerät zuvor die Aktivierung des besagten Dienstes über den zweiten Funknetz-Controller (15) angefordert hat:
- Mittel zum Empfangen, ab dem zweiten Funknetz-Controller, einer Anforderung für die Übertragung der zweiten Kennung des Dienstes, dessen Aktivierung zuvor von dem besagten Funkendgerät (11) angefordert wurde, wobei die Anforderung die erste Kennung des besagten Dienstes enthält;
- Mittel zum Übertragen, in Antwort an den zweiten Funknetz-Controller, der zweiten Kennung des besagten Dienstes.

8. Funknetz-Controller (15, 22) in einem Funkkommunikationssystem, welches weiterhin mindestens einen zweiten Funknetz-Controller (14, 21) und ein Kernnetz (20), an welches der besagte Funknetz-Controller angeschlossen ist, umfasst,
wobei der Funknetz-Controller Mittel zum Erhalten einer ersten Kennung eines jeden der Multicast-Dienste, dessen Aktivierung zuvor von mindestens einem Funkendgerät (1, 11) über den besagten Funknetz-Controller angefordert wurde, sowie Mittel zum Benachrichtigen der Funkendgeräte, welche sich in einem Abdeckungsgebiet des besagten Funknetz-Controllers befinden, über den vom Kernnetz signalisierten Beginn mindestens einer einem der besagten Multicast-Dienste entsprechenden Sitzung umfasst, wobei die Benachrichtigung die erste Kennung des besagten Dienstes enthält,
wobei der Funknetz-Controller relativ zu einem Funkendgerät (11), welches sein Abdeckungsgebiet betritt, nachdem es sich im Abdeckungsgebiet des zweiten Funknetz-Controllers aufgehalten hat, wobei das besagte Funkendgerät zuvor die Aktivierung eines Multicast-Dienstes über den besagten zweiten Funknetz-Controller angefordert hat, weiterhin Mittel zum Empfangen der ersten Kennung des besagten Dienstes ab dem zweiten Funknetz-Controller umfasst,
wobei der Funknetz-Controller weiterhin Mittel zum Anfordern, dass ihm das Kernnetz den Beginn einer einem Multicast-Dienst entsprechenden Sitzung signalisiert, wobei die Anforderung die zuvor von dem besagten Funknetz-Controller erhaltene zweite Kennung des besagten Dienstes enthält, wobei die zweite Kennung eines jeden Dienstes eine größere Länge als die erste Kennung desselben Dienstes aufweist,
wobei der Funknetz-Controller weiterhin, wenn kein Funkendgerät zuvor die Aktivierung des besagten Dienstes über den besagten Funknetz-Controller angefordert hat, umfasst:
- Mittel zum Anfordern der Übertragung, durch den zweiten Funknetz-Controller, der zweiten Kennung des Dienstes, dessen Aktivierung zuvor von dem besagten Funkendgerät (11) angefordert wurde, wobei die Anforderung die erste Kennung des besagten Dienstes enthält;
- Mittel zum Empfangen, in Antwort, der zweiten Kennung des besagten Dienstes ab dem zweiten Funknetz-Controller; und
- Mittel zum Anfordern, dass das Kernnetz ihm den Beginn einer dem besagten Dienst entsprechenden Sitzung signalisiert, wobei die Anforderung die zweite Kennung des besagten Dienstes, welche von den Mitteln zum Empfangen der zweiten Kennung des besagten Dienstes ab dem zweiten Funknetz-Controller empfangen wurde, enthält.
